# EUROPEAN PATENT APPLICATION

(11) **EP 1 530 399 A2**
(43) Date of publication of application: **11.05.2005**
(21) Application number: 04256445.0
(22) Date of filing: 20.10.2004
(51) Int. Cl.: H04Q 7/38

(54) **Method and apparatus for controlling a communication connection**

(30) Priority: 10.11.2003 GB 0326173
(71) Applicant: Nokia Corporation, 02150 Espoo (FI)
(72) Inventor: Wigard, Jeroen, 9220 Aalborg (DK); Mogensen, Preben, 9260 Gistrup (DK)
(74) Representative: Style, Kelda Camilla Karen

(57) **Abstract**

This invention relates to a method of controlling a connection comprising a first link and a second link, said method comprising the steps of determining if one of said links is limiting capacity of said connection and if so, changing one or more parameters relating to at least one of said links to change the capacity of at least one of said links.

## Description

### Field of the Invention

The present invention relates to a method and a controller for controlling a connection.

### Background of the Invention

In a typical cellular wireless network, the area covered by the network is divided into a number of cells. Each cell is served by a base transceiver station which transmits signals to and receives signals from terminals or user equipment located in the respective cell associated with a particular base transceiver station. It should be appreciated that terminology used may be dependent on the standard in question and accordingly, the base transceiver station may be sometimes referred to as "node B". In this document, the term base transceiver station is intended to cover any entity in any standard which provides the function where radio signals are transmitted to and received from user equipment.

The system described may allow for the communication of voice, data, multimedia and so on.

The known systems typically operate in accordance with a given standard or specification which sets out what the various elements of the system are permitted to do and how that should be achieved. For example, the standard or specification may define if the user or more precisely user equipment is provided with a packet switched service or a circuit switched service.

Communication protocols and/or parameters which should be used for the connection may also be defined. In other words, a specific set of rules on which a communication can be based need to be defined to enable communication to take place in the system.

Various standards have been proposed and are being used. One example of such a system is the GSM (Global System for Mobile communications) which uses a principle of time division multiple access to allow multiple users access to the system. The so-called third generation (3G) systems use code division multiple access in order to distinguish users. One example of such a system is the UMTS (Universal Telecommunication System) standard.

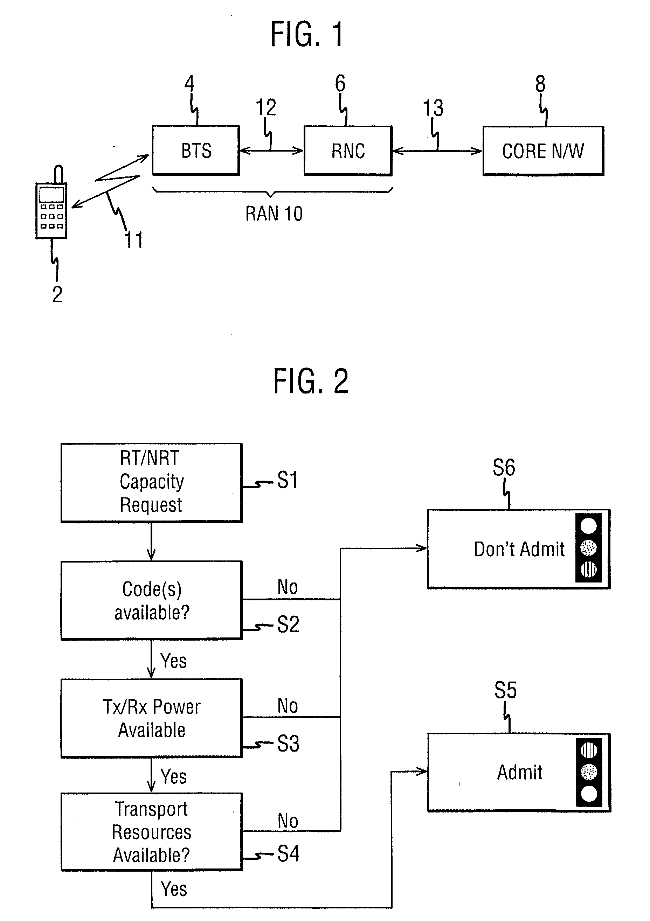

Reference is made to figure 2 which shows the radio resource management (RRM) and call admission control (CAC) functionalities in a UMTS system. The radio resource management functionality is responsible for utilisation of the air interface resources, that is the radio resources. The communications between the user equipment and the base station are via the air interface. The radio resource management is used to guarantee quality of service, to maintain the planned coverage area and to offer high capacity. The RRM functionality therefore deals with handover control, power control, admission control (to the air interface), load control and packet scheduling functionalities.

The call admission control (CAC) is responsible for admission control of the transport network. In other words, the call admission control checks there are resources available for the call in the radio access network. These resources are not radio resources but are usually wired connections between for example the base transceiver station and the base transceiver station controller (the Iub interface).

The known procedure is now described with reference to figure 2. In step S1, a radio resource request is received. This can either be from the mobile station or from a core network. This will depend on whether the user equipment is initiating the call or whether the user equipment is to receive a call. A capacity request can be a real time or a non real time request depending on the nature of the call.

In step S2 it is determined whether or not there is a code available. In CDMA, a number of users can use the same frequency at the same time. The users are distinguished by orthogonal codes. Step 2 checks whether there are any free codes available for the connection. If it is determined that there are codes are available, then the next step is to check whether the transmission receiver power is available for a given bit rate. This is done in step S3.

With a CDMA system, the power levels tend to be tightly controlled. If the power levels are too high, then the interference in the system increases and may reach a point where the bit error rate becomes unacceptably high. Accordingly, it is checked to see whether or not there is power available for a given bit rate. If so, the next step is step S4. In step S4, it is checked whether or not there are transport resources available i.e. resources between for example the base station and the radio network controller. If there is, then the next step is S5 where the call is admitted.

If any of steps S2, S3 or S4 fails, then the next step is S6. With this current scheme, the call admission control and the radio resource management do not interact. Thus, a call can be admitted by the radio resource management since there are enough radio resources available but it can be still blocked at the Iub interface.

Additionally, if one of the resources is used to capacity, the other resource may not be used to capacity. This is inefficient.

It is an aim of embodiments of the present invention to address one or more of these problems.

### Summary of the invention

According to one aspect of the present invention, there is provided a method of controlling a connection comprising a first link and a second link, said method comprising the steps of determining if one of said links is limiting capacity of said connection and if so, changing one or more parameters relating to at least one of said links to change the capacity of at least one of said links.

According to a second aspect of the present invention, there is provided a method of controlling a connection comprising a first link and a second link, said method comprising the steps of determining if one of said links is limiting capacity of said connection and if so, changing one or more parameters relating to at least one of said links whereby the other of said links is used to improve the quality of said connection.

According to a third aspect of the present invention, there is provided a method of selecting a bit rate for a connection comprising a first link and a second link, said method comprising the steps of, for a plurality of bit rates determining if resources are available in both first and second links for a given bit rate, selecting a bit rate for which it is determined in said determining step that resources are available in both said first and second links, and using said selecting bit rate in said connection.

According to a fourth aspect in the present invention, there is provided a method of changing a bit rate for one of a plurality of connections comprising a first link and a second link, said method comprising the steps of selecting a new bit rate for said one connection, and determining if resources are available in both said first and second links for said new bit rate and if so selecting said new bit rate for said connection.

According to a fifth aspect in the present invention, there is provided a controller for controlling a connection comprising a first link and a second link, said controller comprising means for determining if one of said links is limiting capacity of said connection and means for causing one or more parameters relating to at least one of said links to be changed to thereby change the capacity of at least one of said links, if one of the links is limiting capacity.

According to another aspect of the present invention, there is provided a controller for controlling a connection comprising a first link and a second link, said controller comprising means for determining if one of said links is limiting capacity of said connection, and means for causing one or more parameters relating to at least one of said links to be changed if one of the links is changing capacity whereby the other of said links is used to improve the quality of said connection.

According to another aspect of the present invention, there is provided a controller for selecting a bit rate for a connection comprising a first link and a second link, said controller comprising, determining means for determining for a plurality of bit rates if resources are available in both said first and second links for a given bit rate, and selecting means for selecting a bit rate for which it is determined in said determining step that resources are available in both said first and second links.

According to another aspect of the present invention, there is provided a controller for changing a bit rate for one of a plurality of connections comprising a first link and a second link, said controller comprising means for selecting a new bit rate for said one connection, and means for determining if resources are available in both said first and second links for said new bit rate, and means for selecting, if so, said new bit rate for said connection.

### Brief Description of Drawings

For a better understanding of the present invention and as to how the same may be carried into effect, reference will now be made by way of example only to the accompanying drawings in which:
Figure 1 shows schematically a network within which embodiments of the present invention can be implemented;
Figure 2 shows the current radio resource management and call admission control function;
Figure 3 shows a first embodiment of the present invention where the call admission control and radio resource management functions are integrated, with figure 3 showing the procedure for a new connection;
Figure 4 shows the integration of the radio resource management and call admission control functionalities, where the capacity is changed during a connection; and
Figure 5 illustrates schematically a method for equalisation of the transport capacity and the air interface capacity.

Detailed description of preferred embodiments of the present invention.

Reference is made to figure 1 which schematically shows a network within which embodiments of the present invention can be implemented. User equipment 2 is shown as having a connection to a base transceiver station 4. The connection between the user equipment 2 and the base transceiver station 4 is via a radio interface 11. This is the so called air interface. The user equipment 2 can take any suitable form of wireless equipment and may for example be a mobile telephone, a mobile station, a lap top, computer, personal digital assistant, or a mobile telephone or the like connected to any of these types of equipment or any other equipment.

The base transceiver station 4 is connected to a radio network controller RNC 6. It should be appreciated that depending on the standard in question, the radio network controller may be referred to as a base station controller. It should be appreciated that for the purposes of this document, the term radio network controller 6 is intended to cover any other functionality providing a similar function, that is some control of the base transceiver station 4.

In practice, a radio network controller 6 will control a number of base transceiver stations 4. For clarity, only one base transceiver station is shown. Likewise, each base transceiver station 4 in practice will communicate with a large number of user equipment, only one of which is again shown for clarity.

There is an interface 12 between the base transceiver station 4 and the radio network controller 6. This is referred to as the Iub interface. This is a wired connection.

The base transceiver stations and the radio network controller together define a radio access network RAN 10. In networks which are in accordance with the UMTS standard, the radio access network 10 may be referred to a UTRAN (UMTS transport RAN).

In some embodiments of the present invention, the functions provided by the radio network controller may be provided in distributed format with those functions effectively being provided by base transceiver station entities. In alternative embodiments of the present invention, the RNC function may be limited with the majority or at least some of the function being distributed to the base transceiver stations.

The RAN 10 is connected to a core network 8 via a connection 13 which is a wired connection.

A radio resource management function together with a call admission control function is provided in the radio access network 10. This combined function may be provided in the radio network controller, in one or more base transceiver stations or a combination of base transceiver stations and radio network controller. The optimum positioning of the radio resource management and call admission control function may depend on the implementation of the network. Where the radio network controller 6 has a relatively full function, it is preferred that the radio resource management and call admission control functions be provided in the radio network controller 6.

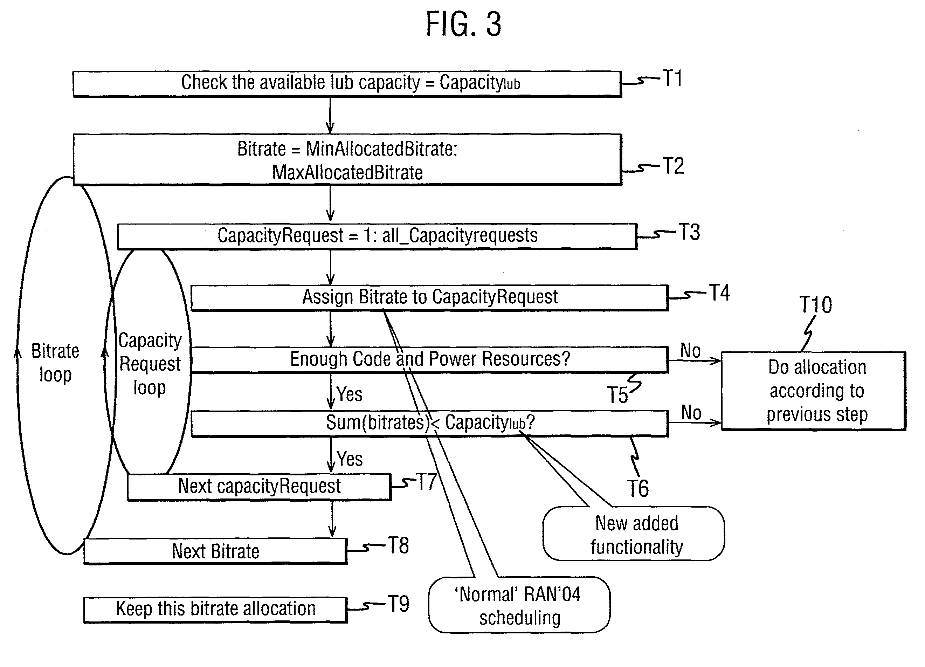

Reference is made to figure 3 which shows schematically the combined radio resource management function and call admission control function. The example shown in figure 3 is for a new connection, that is where the user equipment 2 initiates a call or the user equipment is about to receive a call.

In step T1, the available Iub capacity is checked. This can be based on current measurements or on estimations. The method illustrated in figure 3 is run for a capacity allocation period. The capacity allocation period may be fixed and may be of the order of 100-2000ms. This is by way of example only and other time periods may be used. Alternatively, the capacity allocation period may vary with time. For example, the capacity allocation period may be shorter during periods of peak demand and longer during other periods.

In step T2, the bit rate for a given request can be selected from a set of bit rates which includes a minimum allocated bit rate and a maximum allocated bit rate. The set may be predefined or may be defined depending on the nature of the call and/or the time of day. In step T3, one of the capacity requests in selected.

In step T4, a bit rate is assigned to the capacity request. This is based on the information determined in step T2. The assigned bit rate starts with the minimum allocated bit rate.

In step T5, it is determined whether or not there are enough code and power resources for the assigned bit rate for the capacity request. In other words, it is determined whether or not there are sufficient radio resources. If so, the next step is step T6 where the sum of the bit rates of all the connections is checked to see whether or not it is less than the capacity of the Iub interface. In other words, it is checked to see whether there are transport resources available. If there are still transport resources available, then the next step would be step T7 which effectively feeds back to step T3 and the steps T3 to T6 are carried out for the next capacity request. Once all of the capacity requests have been completed, then the next step would be step T8. Steps T2 to T7 are then repeated for the next highest allocated bit rate.

If it is determined in step T5 that there are not sufficient radio resources or in step T6 that there is not sufficient transport resources, then the bit rate allocated in the previous bit rate loop operation is selected. For example, if there are three available bit rates, bit rate a, bit rate b and bit rate c where a is the minimum and c is the maximum bit rate, if there is sufficient capacity for bit rate a and bit rate b, but not for bit rate c, the flow shown in figure 3 will effectively show that bit rate a and b can be used but that there will not be enough code and power resources and/or enough transport resources for rate c. Once this is determined, then the selected bit rate is the highest bit rate i.e. bit rate b for which there are sufficient radio and transport resources.

In summary, all the capacity requests are allocated bit rates starting with the minimum allowed bit rate and increasing step by step. At each step it is checked whether the power and code resources and transport resources are available to do this allocation.

It should be appreciated that in some embodiments of the present invention, the defined range of minimum and maximum allocated bit rates will be dependent on the type of service, quality of service and/or time of the request. It should be appreciated that, different capacity requests may have different possible bit rate ranges.

In alternative embodiments of the present invention, a common set of available bit rates may be used for all capacity requests.

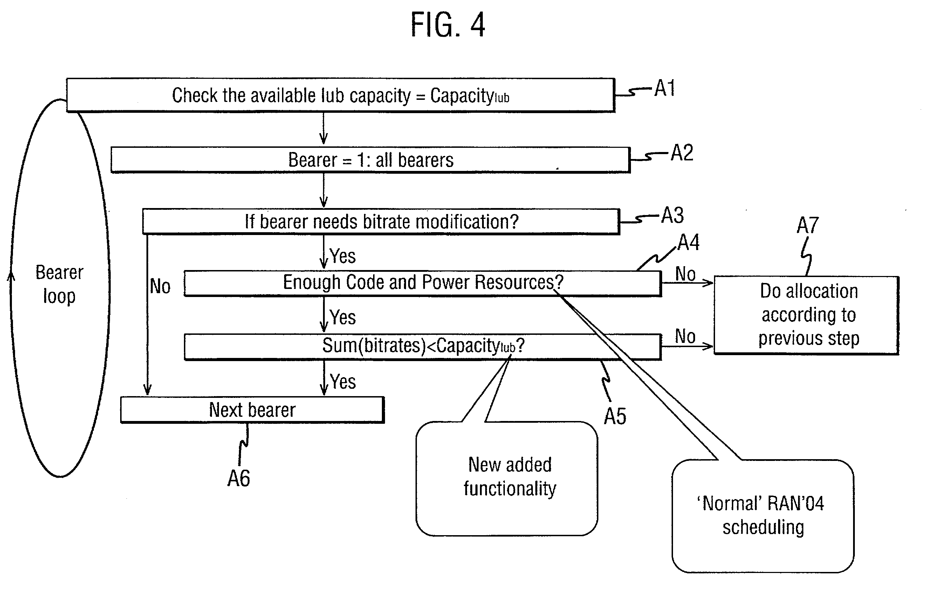

Reference is now made to figure 4 which shows the steps which are carried out where the capacity is to be altered during a connection. The embodiment shown in figure 4 is in the context of a packet connection. However, it should be appreciated that embodiments of the present invention may also be applicable to circuit switched connections. The arrangement shown in figure 3 can be carried out for both packet and circuit switched connections.

In step A1, the available Iub capacity is checked to provide the quantity CapacityIub. This is the transport resource. This is based on measurements or can be estimated.

In step A2, it is determined which bearer or connection is to be considered. In step S3, it is determined whether the bearer is one which requires bit rate modification. If not, the next step is A6 where the user is returned to step A2 and the next bearer or connection is selected. In other words, step A2-A6 are repeated for all of the bearers or connections.

If it is determined in step A3 that the bearer requires bit rate modification, then it is checked to see whether or not there is enough code and power resources available. This is carried out in Step A4. In step A4, it is assumed that the bearer is assigned the desired new bit rate. If it is determined that there are enough code and power resources i.e. radio resources, then the next step is step A5 where it is determined whether the sum of all the bit rates is less than the capacity of the Iub connection. In other words, it is checked to see if there are sufficient transport resources. If there are, for the desired new bit rate, then the next step is step A6 as discussed already.

If it is determined in step A4 or A5 that there are not sufficient radio resources or sufficient transport resources, then the bit rate prior to modification is used.

In one embodiment of the present invention, the same sort of method as shown in figure 3 is used where the process is repeated for a range of bit rates for a minimum to a maximum bit rate. The bit rate which is used will be the maximum bit rate for which there are sufficient radio resources as well as sufficient transport resources.

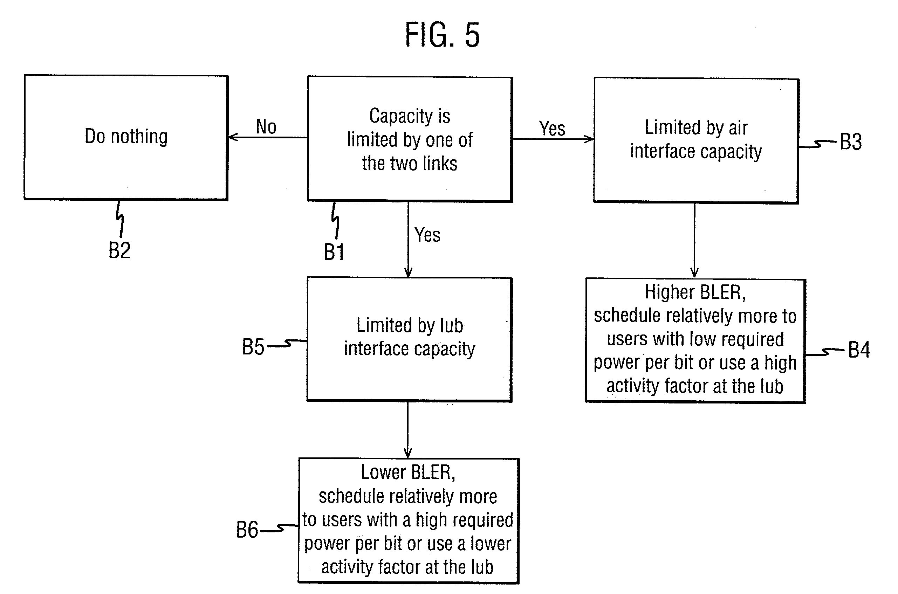

Reference is now made to figure 5 which shows a flow chart for the equalisation of the capacities. In particular, the embodiments shown in figure 5 is directed to attempting to equalise the Iub, that is the transport capacity and the air interface, that is the radio resource capacity.

In step B1 it is determined whether the capacity of the system is limited by one of the two links i.e. by the radio resource or the transport resource link. If it is determined that there is no limit imposed in the capacity by either or the two links, then the next step will be B2 which is to do nothing.

If is determined that the capacity is being limited by one of the two links, then it is determined which of these two links is limiting the capacity. If it is determined that the capacity is being limited by the radio resource capacity, then the next step is step B3. This is generally determined if the power or codes are the limiting factor.

The next step is then step B4. There are a number of different options which can be used in step B4. These options can be used as alternatives in different embodiments of the invention or in further embodiments of the invention, two or more of these options may be combined.

If it is determined that the air interface is the limiting factor, the last bit rate allocation which is able to be accommodated by the radio resources can be selected. Alternatively, a higher BLER (block error rate) can be used if this leads to a lower required power per correct received bit. Block error rate is the number of blocks or packets which can be discarded in a connection. Alternatively or additionally, relatively more capacity may be scheduled to users with a low required power per correct received bit. In other words more is scheduled to users with a low required power/bit and less to users with a high required power/bit. As discussed below, this leads to a lower average power/bit. Alternatively or additionally a higher activity factor may be used at the Iub interface. A higher activity factor means that less overbooking can be used.

Using a higher block error rate or scheduling relatively more to users with a lower required power per correctly received bit will lead to a lower average required power per correct received bit. This means that more data can be sent in the totality and the Iub interface will be utilised better. In other words, the air interface starts to better match the capacity of Iub interface. The third option of using a higher activity factor at the Iub interface means that it is less likely that the blocks are discarded at the Iub interface

If it is determined in step B1 that the capacity is being limited by the Iub interface capability then the next step is step B5. If it is concluded that the Iub interface is the limiting factor and that there is enough air interface capacity then the next step is B6. One option would be to keep the last bit rate allocation which can be supported by the available transport and radio resources. Alternatively or additionally, one or more of the following three actions can be taken. As mentioned in relation to the air interface, these options can be used separately or two more options can be used in combination. A lower block error rate can be used and/or relatively more capacity can be scheduled to users with a high required power per correct bit and/or a lower activity factor can be used at the Iub interface. The use of a lower block error rate leads to a better end user quality of service. If the option of scheduling relatively more to users with a high required power is used, this will lead to a different quality of service distribution amongst the users. The option of using a lower activity factor at the Iub interface means that there is more over booking at the Iub interface which means that it is more likely that blocks are discarded at the Iub interface.

In summary where the capacity is limited by one of the links, embodiments of the invention try to improve the "capacity" of the limiting link or try to use the non limiting link to the maximum capacity to improve the quality of service.

It should be appreciated that using a higher BLER, if this leads to a lower required power per correct received bit may lead to a worse end user quality of service and a longer round trip time. Scheduling relatively more or less to users with a lower required power per correct received bit may lead to an undesirable distribution of the quality of service amongst the users. Using a lower block error rate leads to more power being transmitted so the interference levels may also increase. Using more over booking at the Iub interface mean that it is more likely that the blocks will be discarded at the Iub interface. These disadvantages are offset by the advantages mentioned about namely that the remaining capacity of the non limiting link can be used to improve the quality of service and/or the capacity of the limiting link is improved. In order to mitigate some of these disadvantages, preferred embodiments of the present invention set parameters for these various different actions. For example, there may be a maximum block error rate or a minimum block error rate. Alternatively, the maximum permitted block error rate may be defined with reference to the currently used block error rate for example, if the current block error rate is x, then the maximum block error rate that can be used is x + y. Of course there are various different ways which this maximum block error rate could be defined for example using subtraction, multiplication, and the introduction of various other factors. This can be done for any of the parameters which are altered. That is the block error rate, the number of uses scheduled and the over booking factor.

One of two scheduling strategies may be used. These scheduling strategies are by way of example only and any other scheduling strategy may alternatively or additionally be used. Fair throughput (FT) is where all the users in the cell get the same through put provided they have enough data to transmit. Another scheduling strategy is fair resource scheduling (FR). In the case of FR scheduling, all the users get the same amount of resources, received/transmitted power and allocation time. In case of FR, the system throughput is higher leading to a higher Iub throughput than in the case of FT scheduling. In the case of FT scheduling, the user's quality of service is identical for all users, whereas in the case of FR, the users at the cell get a lower bit rate. Different scheduling can be used depending on where there is limitation in capacity provided by the link. For example, FR scheduling can be used in the case where capacity is linked by the Iub capacity. FT scheduling can be used where the limitation and capacity is provided by the radio resource.

In alternative embodiments of the invention, error rates other than BLER maybe used.

It should be appreciated that shown in figure 5 is preferable used in conjunction with the embodiments shown in figure 3 or figure 4. However, in alternative embodiments of the present invention, the embodiment of figure 3 or figure 4 can both be used without the embodiments shown in figure 5. Likewise, the embodiment shown in figure 5 may be used outside the arrangement shown in figure 3 or figure 4. Embodiments of the invention have been described as starting with the lowest bit rate and then repeating with the next highest bit rate. Other embodiments of the invention may start with the highest bit rate and repeat with the next highest rate and so on. In alternative embodiments, a more sophisticated approach may be taken, where an estimate is made for the optimum bit rate and depending on the results of the process, the bit rate is increased or decreased depending on whether the bit rate is supportable.

The preferred embodiments of the present invention have been described as selecting the highest available bit rate. It should be appreciated that alternative embodiments may use different criteria to select the bit rate to be used.

Embodiments of the present invention have been described as being carried out in the RNC and or base stations. In alternative embodiments of the present invention, a separate entity may be provided to carry out the combined radio resource management and call admission control function. This entity may be solely responsible for this function or may alternatively provide additional functions. The embodiment shown in Figure 5 may used separate CAC and RRM functions.

In preferred embodiments of the present invention, the combined radio resource management and call admission control function is provided in the radio access network. However, in alternative embodiments of the present invention, this function may for example be provided in the core network.

Embodiments of the present invention may be implemented in software and or hardware. Embodiments of the present invention also relate to a computer program for carrying out the methods described in relation to figures 3, 4 and/or 5.

Embodiments of the present invention have been described in relation to the UMTS standard. However, it should be appreciated that embodiments of the present invention can be applied to any other suitable standard not limited to 3G standards.

In embodiments of the present invention, the radio resource capacity has been defined by the code and power resources. In some embodiments of the present invention, it may be sufficient to consider only one of these i.e. the code or the power resources. In alternative embodiments of the present invention, alternative measures of the radio resources may be used and the determination of radio resource capacity. This is particularly the case where embodiments of the invention are used in different standards, for example standards which do not use code division multiple access.

Embodiments of the present invention can be used for hardware or baseband resources for which the same principles can be applied as for the transport resources.

The capacity of the transport network has been considered in the context the capacity of the Iub interface. It should be appreciated that different standards may have interfaces which are equivalent or the same as the Iub interface. Embodiments of the present invention are applicable to such systems. Additionally, other measures of the transport network capacity can be used to determine the availability of transport resources.

## Claims

1. A method of controlling a connection comprising a first link and a second link, said method comprising the steps of:
determining if one of said links is limiting capacity of said connection; and
if so, changing one or more parameters relating to at least one of said links to change the capacity of at least one of said links.

2. A method as claimed in claim 1, wherein the changing step comprises changing at least one parameter relating to at least one of said links to increase the capacity of the limiting link.

3. A method as claimed in claim 1 or 2, wherein the changing step comprised changing the at least one parameter relating to the other of said links to improve quality of said connection.

4. A method as claimed in any preceding claim, wherein at least one parameter comprises at least one of bit rate; error rate; block error rate; bit error rate; activity factor at an interface with one of said links; scheduling of users with a given bit rate.

5. A method as claimed in claim 4, wherein said changing step comprises decreasing said bit rate.

6. A method as claimed in claim 4 or 5 wherein the changing step comprises increasing the error rate if said first link is limiting capacity.

7. A method as claimed in any of claims 4 to 6 wherein the changing step comprises decreasing the error rate if the second link is limiting said bit rate.

8. A method as claimed in any of claims 4 to 7, wherein the changing step comprises using a higher activity factor at an interface with said second link if said first link is limiting capacity.

9. A method as claimed in any of claims 4 to 8, wherein the changing step comprises using a lower activity factor at an interface with said second link if said second link is limiting capacity.

10. A method as claimed in any of claims 4 to 9, wherein the changing step comprises scheduling more capacity to users with a relatively low power per bit if said first link is limiting capacity.

11. A method as claimed in any of claims 4 to 10, wherein the changing step comprises scheduling more capacity to users with a relatively high power per bit if said second link is limiting capacity.

12. A method as claimed in any of claims 4 to 11, wherein said changing step comprises using fair throughput scheduling if the first link is limiting capacity.

13. A method as claimed in any of claims 4 to 12, wherein said changing step comprises using fair resource scheduling if said second link is limiting capacity.

14. A method as claimed in any of claims 4 to 13, wherein at least one parameter has at least one limiting value.

15. A method as claimed in claim 14, wherein said limiting value is one of an absolute value and amount of change in said parameter.

16. A method as claimed in any preceding claim, wherein said first link comprises a radio link.

17. A method as claimed in any preceding claim, wherein said second link comprises a transport link.

18. A method of controlling a connection comprising a first link and a second link, said method comprising the steps of:
determining if one of said links is limiting capacity of said connection; and
if so, changing one or more parameters relating to at least one of said links whereby the other of said links is used to improve the quality of said connection.

19. A method of selecting a bit rate for a connection comprising a first link and a second link, said method comprising the steps of:
for a plurality of bit rates determining if resources are available in both said first and second links for a given bit rate;
selecting a bit rate for which it is determined in said determining step that resources are available in both said first and second links; and
using said selecting bit rate in said connection.

20. A method as claimed in claim 19, wherein said determining step is carried out first with a minimum bit rate with the or each successive determination using a higher bit rate.

21. A method as claimed in claim 19, wherein said determining step is carried out first with a maximum bit rate with the or each successive determination using a lower bit rate.

22. A method as claimed in claim 20 or 21, wherein said determining step is carried out until a bit rate for which resources are available in both said first and second links.

23. A method as claimed in any of claims 19 to 22 wherein said selection step comprises selecting the highest bit rate for which resources are available in both said first and second links.

24. A method as claimed in any of claims 19 to 23 wherein said determining step comprising determining for said first link if sufficient code and/or power and/or hardware and/or baseband resources are available.

25. A method as claimed in any of claims 19 to 24, wherein said connection is one of a new connection and established connection.

26. A method as claimed in any of claims 19 to 25 wherein a plurality of connections are provided which comprise said first link and said second link.

27. A method as claimed in claim 26, wherein said determining and selecting steps are carried out for at least two of said plurality of connections.

28. A method as claimed in claim 26 or 27, wherein said determining step for said second link comprises summing the bit rates for said plurality of connections.

29. A method of changing a bit rate for one of a plurality of connections comprising a first link and a second link, said method comprising the steps of:
selecting a new bit rate for said one connection; and
determining if resources are available in both said first and second links for said new bit rate; and if so selecting said new bit rate for said connection.

30. A controller for controlling a connection comprising a first link and a second link, said controller comprising:
means for determining if one of said links is limiting capacity of said connection; and
means for causing one or more parameters relating to at least one of said links to be changed to thereby change the capacity of at least one of said links, if one of the links is limiting capacity.

31. A controller for controlling a connection comprising a first link and a second link, said controller comprising:
means for determining if one of said links is limiting capacity of said connection; and
means for causing one or more parameters relating to at least one of said links to be changed if one of the links is changing capacity whereby the other of said links is used to improve the quality of said connection.

32. A controller for selecting a bit rate for a connection comprising a first link and a second link, said controller comprising:
determining means for determining for a plurality of bit rates if resources are available in both said first and second links for a given bit rate; and
selecting means for selecting a bit rate for which it is determined in said determining step that resources are available in both said first and second links.

33. A controller for changing a bit rate for one of a plurality of connections comprising a first link and a second link, said controller comprising:
means for selecting a new bit rate for said one connection; and
means for determining if resources are available in both said first and second links for said new bit rate; and
means for selecting, if so, said new bit rate for said connection.

34. A controller as claimed in any of claims 30 to 33, wherein said controller comprises software, said software providing one or more of the following:
means for determining, means for selecting, and means for causing.

35. A controller as claimed in any of claims 30 to 34, wherein said controller is provided in an radio network controller.

36. A system comprising:
a first entity;
a second entity;
a third entity, wherein a connection is establishable between said first, second and third entities with a first link provided between the first entity and the second entity and a second link provided between said second entity and said third entity; and
a controller as claimed in any preceding claim for controlling said connection.

37. A computer program product comprising software code portions for performing the steps of any of claims 1 to 29, when said product is run.
